# EUROPÄISCHE PATENTANMELDUNG

(11) **EP 2 136 047 A2**
(43) Veröffentlichungstag der Anmeldung: **23.12.2009**
(21) Anmeldenummer: 09162253.0
(22) Anmeldetag: 09.06.2009
(51) Int. Cl.: F02B 29/04

(54) **Wärmeübertrager**

(30) Priorität: 20.06.2008 DE 102008029455; 14.11.2008 DE 102008057420
(71) Anmelder: MAHLE International GmbH, 70376 Stuttgart (DE)
(72) Erfinder: Beetz, Klaus, 76149, Karlsruhe (DE); Grüner, Andreas, 73100, Hattenhofen (DE)
(74) Vertreter: Bongen, Renaud & Partner

(57) **Zusammenfassung**

Die vorliegende Erfindung betrifft einen Wärmeübertrager zum Übertragen von Wärme zwischen einem ersten Fluid (2) und einem zweiten Fluid (3) in einem Kraftfahrzeug (25), bei dem alle fluidführenden Komponenten (4, 5, 6, 7) des Wärmeübertragers (1) aus Kunststoff hergestellt sind.

Eine Einsparung von Bauraum lässt sich erreichen, wenn der Wärmeübertrager (1) in ein Fahrzeugbauteil (17, 19, 20, 26, 27, 28, 29, 30, 32, 34, 35) integriert ist, das im Fahrbetrieb des Fahrzeugs (25) von einer Luftströmung (33) angeströmt oder umströmt ist.

## Beschreibung

Die vorliegende Erfindung betrifft einen Wärmeübertrager zum Übertragen von Wärme zwischen einem ersten Fluid und einem zweiten Fluid in einem Kraftfahrzeug.

Wärmeübertrager in Kraftfahrzeugen sind allgemein bekannt, zum Beispiel als Hauptkühler im Kühlkreis einer Brennkraftmaschine des Fahrzeugs, als Ladeluftkühler im Frischluftstrom stromab einer Ladeeinrichtung, wie zum Beispiel eines Abgasturboladers, als Ölkühler im Ölkreis einer Brennkraftmaschine, als Heizer oder als Kühler zur Innenraumklimatisierung des Fahrzeugs. Ferner ist es grundsätzlich bekannt, bei einem Wärmeübertrager alle fluidführenden Komponenten aus Kunststoff herzustellen, wodurch der Wärmeübertrager besonders preiswert herstellbar ist. Problematisch bei solchen Kunststoff-Wärmeübertragern sind die begrenzte Belastbarkeit hinsichtlich Druck und Temperatur. Dementsprechend kommen derartige Kunststoff-Wärmeübertrager bislang in Kraftfahrzeugen nicht zur Anwendung.

Die vorliegende Erfindung beschäftigt sich mit dem Problem, für einen Kunststoff-Wärmeübertrager der eingangs genannten Art eine verbesserte Ausführungsform anzugeben, die sich insbesondere dadurch auszeichnet, dass sie für eine Verwendung in einem Kraftfahrzeug geeignet ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Wärmeübertrager in ein anderes, ohnehin am Fahrzeug vorhandenes Fahrzeugbauteil zu integrieren, wobei dieses Fahrzeugbauteil während des Fahrbetriebs des Fahrzeugs von einer Luftströmung, insbesondere vom sogenannten "Fahrtwind" angeströmt oder umströmt ist. Durch diesen Vorschlag kann Bauraum, der vom jeweiligen Fahrzeugbauteil beansprucht wird, zusätzlich zur Unterbringung des Wärmeübertragers genutzt werden. Hierdurch steht insgesamt mehr Bauraum zur Anordnung des Wärmeübertragers zur Verfügung. Die Erfindung nutzt hierbei die Erkenntnis, dass die Belastung des Wärmeübertragers durch Temperatur und/oder Druck signifikant reduziert werden kann, wenn der Wärmeübertrager insgesamt eine vergleichsweise große Wärmeübertragungsfläche bereitstellen kann bzw. wenn er einen vergleichsweise geringen Durchströmungswiderstand besitzt. Hierzu ist vergleichsweise viel Bauraum erforderlich, der jedoch durch den erfindungsgemäßen Vorschlag, den Wärmeübertrager in ein ohnehin vorhandenes Fahrzeugbauteil zu integrieren, bereitgestellt werden kann.

Entsprechend einer besonders vorteilhaften Ausführungsform kann das Fahrzeugbauteil, in das der Wärmeübertrager integriert ist, an oder in einem Motorraum des Fahrzeugs angeordnet sein. Hierdurch ist der Wärmeübertrager nahe an den Wärmequellen angeordnet, wodurch eine kurze Leitungsführung ausreicht, den Wärmeübertrager in den entsprechenden Kühlkreis einzubinden.

Besonders vorteilhaft ist eine Ausführungsform, bei welcher der Wärmeübertrager als Ladeluftkühler ausgestaltet ist, der im Motorraum im Frischluftstrom stromab einer Ladeeinrichtung, bei der es sich insbesondere um einen Abgasturbolader handeln kann, angeordnet ist. Da die Zieltemperatur der Ladeluftkühlung im Vergleich zu anderen Fluidtemperaturen eines Kraftfahrzeugs relativ niedrig ist, eignet sich der hier vorgeschlagene Kunststoffwärmeübertrager in besonderer Weise zur Kühlung von Ladeluft.

Der Wärmeübertrager kann bspw. in eine Zylinderkopfhaube einer Brennkraftmaschine des Fahrzeugs integriert sein. Eine derartige Zylinderkopfhaube wird bei modernen Brennkraftmaschinen ohnehin bereits aus Kunststoff hergestellt und dient zur Abdeckung eines Ventiltriebs. Außerdem handelt es sich dabei um ein vergleichsweise großes Bauteil, was die Integration des Wärmeübertragers vereinfacht.

Alternativ kann der Wärmeübertrager in eine Motorhaube des Fahrzeugs integriert sein, die zum Verschließen des Motorraums dient. Die Motorhaube, die bestenfalls noch eine Schalldämpfungsfunktion aufweist, wirkt durch die Integration des Wärmeübertragers wie ein funktionelles Bauteil. Gleichzeitig kann ein vergleichsweise großer Bauraum, den die üblicherweise hohl ausgebildete Motorhaube bereitstellt, zur Unterbringung des Wärmeübertragers bzw. zu dessen Integration bereitgestellt werden.

Alternativ ist es ebenso möglich, den Wärmeübertrager in eine Motorabdeckung zu integrieren, die im Motorraum quasi zwischen der Motorhaube und der Brennkraftmaschine angeordnet ist. Eine derartige Motorabdeckung dient bspw. als Sichtschutz für die Brennkraftmaschine und/oder als Schallabschirmung der Brennkraftmaschine. Desweiteren kann eine derartige Motorabdeckung als Luftführungselement dienen, dass eine Durchströmung des Motorraums mit Umgebungsluft unterstützt bzw. dass eine Anströmung bzw. Umströmung der Brennkraftmaschine mit Umgebungsluft ermöglicht. Auch eine derartige Motorabdeckung baut vergleichsweise groß und kann daher günstig für die Unterbringung bzw. Integration des Wärmeübertragers genutzt werden.

Entsprechend einer alternativen Bauform ist es ebenso möglich, den Wärmeübertrager in einen Stoßfänger zu integrieren, der am Bug oder am Heck des Fahrzeugs angeordnet ist. Zusätzlich oder alternativ kann der Wärmeübertrager in einen Spoiler des Fahrzeugs integriert sein, der am Bug oder am Heck des Fahrzeugs angeordnet sein kann. Ebenso ist es alternativ möglich, den Wärmeübertrager in einen Radkasten oder in eine Radkastenverkleidung zu integrieren. Besonders interessant ist eine Ausführungsform, bei welcher der Wärmeübertrager in einen Kühlergrill des Fahrzeugs integriert ist. Während ein Haupt-Kühler eines Motorkühlkreises üblicherweise stromab des Kühlergrills im Motorraum angeordnet ist, kann der erfindungsgemäße Wärmeübertrager in diesen Kühlergrill integriert sein, wodurch er optimal angeströmt bzw. umströmt ist. Eine weitere alternative Ausführungsform sieht vor, den Wärmeübertrager in ein Dach des Fahrzeugs zu integrieren. Das Fahrzeugdach zeichnet sich durch eine extrem große Fläche aus, so dass auch hier eine effektive Wärmeübertragung realisierbar ist.

Die Erfindung betrifft außerdem ein Fahrzeugbauteil, in das der Kunststoff-Wärmeübertrager integriert ist. Bei diesem Fahrzeugbauteil kann es sich um ein Mitglied der folgenden Gruppe handeln: Zylinderkopfhaube, Motorhaube, Motorabdeckung, Stoßfänger, Spoiler, Radkasten, Radkastenverkleidung, Kühlergrill, Dach.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Wärmeübertragers,
- Fig. 2 bis 4: jeweils eine stark vereinfachte, schaltplanartige Prinzipdarstellung für Anordnungen eines Wärmeübertragers in einem Motorraum bei unterschiedlichen Ausführungsformen,
- Fig. 5: eine stark vereinfachte schaltplanartige Prinzipdarstellung eines Kraftfahrzeugs mit mehreren Fahrzeugbauteilen, die kumulativ oder alternativ oder in beliebiger Kombination als Wärmeübertrager ausgestaltet sein können.

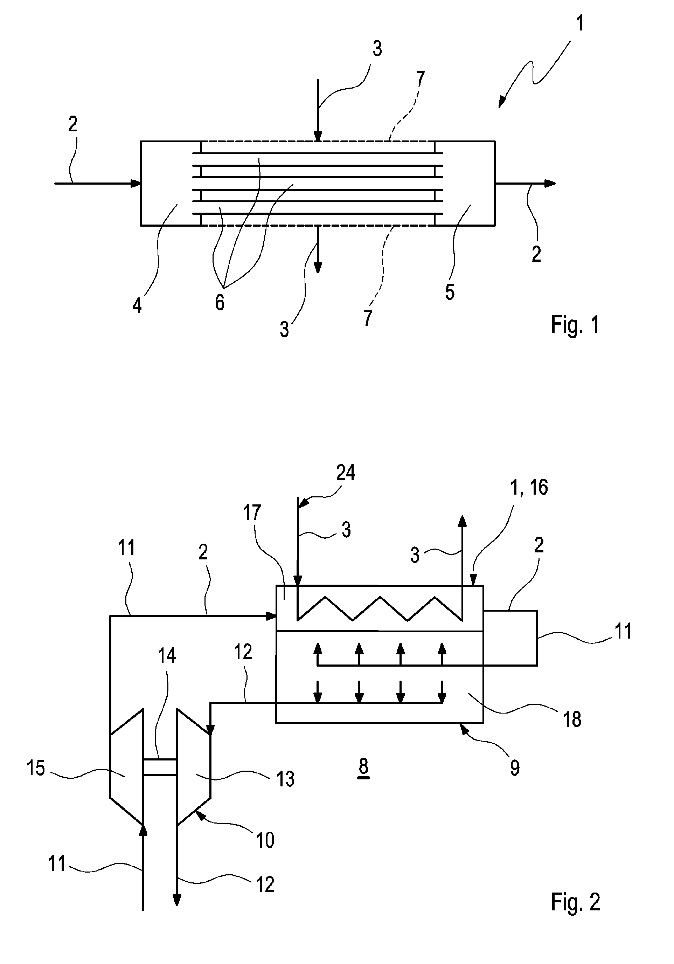

Entsprechend Fig. 1 umfasst ein Wärmeübertrager 1, mit dessen Hilfe Wärme zwischen einem ersten Fluid, repräsentiert durch Pfeile 2, und einem zweiten Fluid, repräsentiert durch Pfeile 3, übertragen werden kann, aus Kunststoff hergestellte fluidführende Komponenten 4 bis 7 und ist zur Unterbringung bzw. zum Einbau in ein Kraftfahrzeug vorgesehen. Bei den genannten fluidführenden Komponenten handelt es sich im Einzelnen um eine Verteilerkammer 4 oder um einen Verteilerraum 4 sowie um eine Sammelkammer 5 oder um einen Sammelraum 5, die durch Kühlrohre 6 miteinander verbunden sind. Hierdurch kann das erste Fluid 2 vom Verteilerraum 4 durch die Kühlrohre 6 zum Sammelraum 5 strömen. In einer offenen Bauweise sind die Kühlrohre 6 bspw. direkt mit Umgebungsluft beaufschlagbar, also insbesondere anströmbar und umströmbar. Alternativ kann auch eine geschlossene Bauweise vorgesehen sein. Dann sind zusätzlich Wände 7 vorhanden, die hier nur mit unterbrochener Linie dargestellt sind. Hierdurch ist es insbesondere möglich, das zweite Fluid 3 durch eine Flüssigkeit zu bilden, bspw. um den Wärmeübertrager 1 in einen geschlossenen Kühlkreis integrieren zu können.

Der Verteilerraum 4 bzw. sein Gehäuse, der Sammelraum 5 bzw. sein Gehäuse und die Kühlrohre 6 sowie die ggf. vorhandenen Wände 7 sind beim erfindungsgemäßen Wärmeübertrager 1 aus Kunststoff hergestellt. In der Folge handelt es sich beim Wärmeübertrager 1 um einen Kunststoff-Wärmeübertrager 1. Fluiddichte Verbindungen zwischen den einzelnen Komponenten 4 bis 7 können bspw. durch Schweißverbindungen realisiert sein. Es ist klar, dass zwischen benachbarten Kühlrohren 6 sowie innerhalb der Kühlrohre 6 Lamellen oder andere Turbulatoren angeordnet sein können, um den Wärmeübergang zu verbessern. Diese Turbulatoren sind zweckmäßig ebenfalls aus Kunststoff hergestellt.

Entsprechend den Fig. 2 bis 4 sind bei einem im Übrigen nicht dargestellten modernen Kraftfahrzeug in einem Motorraum 8 eine Brennkraftmaschine 9 und eine Ladeeinrichtung 10, bevorzugt in Form eines Abgasturboladers angeordnet. Ein Frischluftpfad 11 versorgt Brennräume der Brennkraftmaschine 9 mit Frischluft. Ein Abgaspfad 12 führt Abgas von den Brennräumen der Brennkraftmaschine 9 ab. Bei einer als Abgasturbolader ausgestalteten Ladeeinrichtung 10 ist eine Turbine 13 des Abgasturboladers 10 in den Abgaspfad 12 eingebunden, während ein über eine gemeinsame Antriebswelle 14 mit der Turbine 13 verbundener Verdichter 15 in den Frischluftpfad 11 eingebunden ist. Der Turbolader 10 erhöht den Druck in der Frischluft. Gleichzeitig bewirkt er eine Erwärmung der Frischluft. Zur Erzielung der gewünschten Motorleistung ist es erforderlich, die aufgeladene Frischluft zu kühlen. Hierzu dient z.B. ein Wärmeübertrager 1 der zuvor beschriebenen Art. Dieser Wärmeübertrager 1 ist dann zweckmäßig als Ladeluftkühler ausgestaltet, der im Folgenden auch mit 16 bezeichnet wird.

Bei der in Fig. 2 gezeigten Ausführungsform ist der Wärmeübertrager 1 bzw. der Ladeluftkühler 16 in eine Zylinderkopfhaube 17 der Brennkraftmaschine 2 integriert. Die Zylinderkopfhaube 17 deckt einen Motorblock 18 bzw. dessen Zylinderkopf ab. Insbesondere deckt die Zylinderkopfhaube 17 einen hier nicht näher dargestellten Ventiltrieb der Brennkraftmaschine 9 ab, der bspw. Nockenwellen und Gaswechselventile umfasst. Eine derartige Zylinderkopfhaube 17 kann vorzugsweise aus Kunststoff hergestellt sein. Durch die Integration des Wärmeübertragers 1 bzw. des Ladeluftkühlers 16 in die Zylinderkopfhaube 17 enthält diese die fluidführenden Komponenten des Wärmeübertragers 1, also insbesondere den Verteilerraum 4, den Sammelraum 5 und die Kühlrohre 6 sowie ggf. die Wände 7. Die über den Frischluftpfad 11 transportierte aufgeladene Frischluft bildet dann das erste Fluid 2, das den Wärmeübertrager 1, also hier den Ladeluftkühler 6 durchströmt. Der Wärmeübertrager 1 bzw. der Ladeluftkühler 16 ist im dargestellten Einbauzustand im Frischluftpfad 11 stromab der Ladeeinrichtung 10 angeordnet. Ferner befindet er sich im Frischluftpfad 11 stromauf der Brennkraftmaschine 9.

Im gezeigten Beispiel der Fig. 2 ist der Wärmeübertrager 1, also der Ladeluftkühler 16 außerdem in einen Kühlkreis 24 der Brennkraftmaschine 9 eingebunden. Dieser Kühlkreis 24 kann in üblicher Weise zur Kühlung der Brennräume des Motorblocks 18 der Brennkraftmaschine 9 dienen und insbesondere einen der Umgebungsluft bzw. dem Fahrtwind des Fahrzeugs ausgesetzten Hauptkühler aufweisen. In diesem Kühlkreis 24 zirkuliert üblicherweise ein flüssiges Kühlmittel, das im vorliegenden Beispiel somit das zweite Fluid 3 bildet. Durch die Verwendung eines flüssigen Kühlmittels kann eine relativ hohe Leistungsdichte für den Wärmeübertrager 1 realisiert werden.

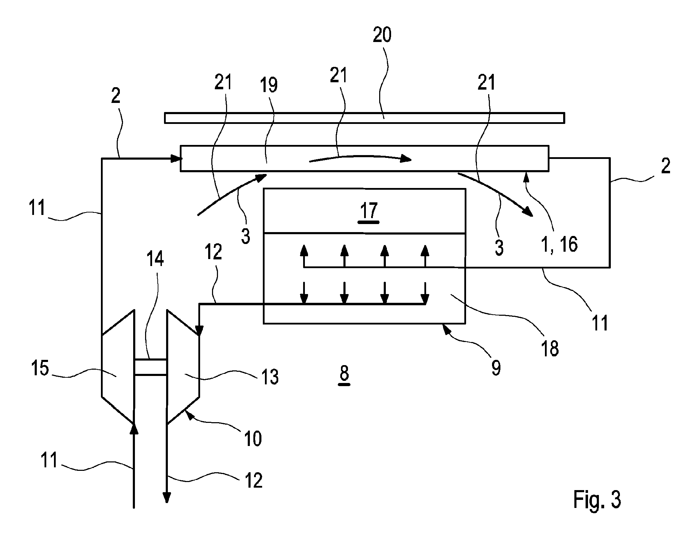

Fig. 3 zeigt eine andere Ausführungsform, bei welcher der Wärmeübertrager 1 und insbesondere der Ladeluftkühler 16 in eine Motorabdeckung 19 integriert ist. Diese Motorabdeckung 19 ist im Motorraum 8 zwischen der Brennkraftmaschine 9 und einer Motorhaube 20 zur Abdeckung des Motorraums 8 angeordnet. Die Motorabdeckung 19 kann zweckmäßig als Sichtschutz für die Brennkraftmaschine 9 dienen. Zusätzlich oder alternativ kann die Motorabdeckung 19 als Schallabschirmung für die Brennkraftmaschine 9 dienen. In der dargestellten Ausführungsform dient die Motorabdeckung 19 ausschließlich oder zusätzlich zu wenigstens einem der vorstehend genannten Funktionen als Luftführungselement. Die Motorabdeckung 19 bewirkt eine Führung für einen Umgebungsluftstrom 21, der hier durch Pfeile angedeutet ist. Dieser Umgebungsluftstrom 21 dient zur Durchströmung des Motorraums 8 bzw. zur Anströmung und/oder Umströmung der Brennkraftmaschine 9, um einen Hitzestau an der Brennkraftmaschine 9 bzw. im Motorraum 8 zu vermeiden. Zweckmäßig bildet der Umgebungsluftstrom 21, der die Motorabdeckung 19 beaufschlagt und der insbesondere von der Motorabdeckung 19 geführt wird, das zweite Fluid 3 des Wärmeübertragers 1 bzw. des Ladeluftkühlers 16. Der Umgebungsluftstrom 21 kann beispielsweise durch eine geeignete Luftführung im Motorraum durch den Fahrtwind erzeugt werden.

Bei der integralen Bauweise ist die Motorabdeckung 19 aus Kunststoff hergestellt und enthält die fluidführenden Kunststoff-Komponenten des Wärmeübertragers 1. Die Motorabdeckung 19 baut vergleichsweise groß, was die Unterbringung eines vergleichsweise großvolumigen Wärmeübertragers 1 ermöglicht. Die Motorabdeckung 19 zeigt hier eine flache Bauweise, das heißt, ihre Höhe ist deutlich geringer als ihre Länge und ihre Breite. Die Motorabdeckung 19 ist insbesondere an die der Motorhaube 19 zugewandte Kontur der Brennkraftmaschine 9 angepasst. Ebenso ist sie zweckmäßig an die der Brennkraftmaschine 9 zugewandte Kontur der Motorhaube 20 angepasst.

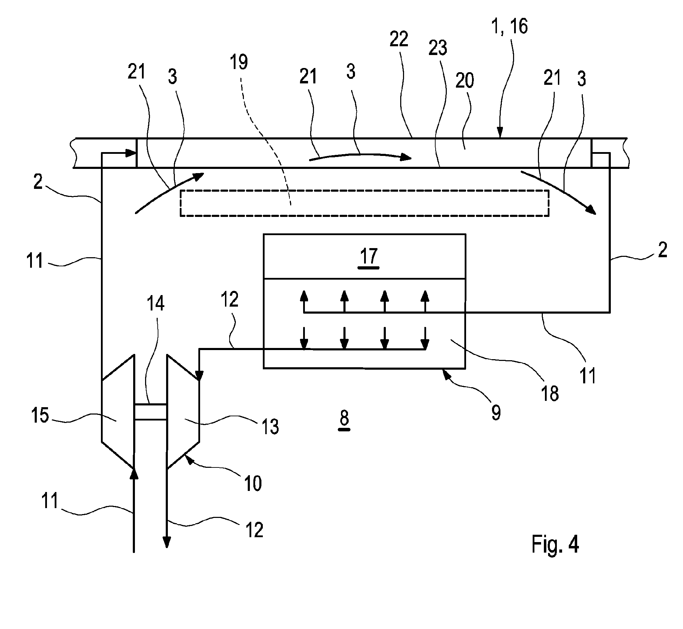

Bei der in Fig. 4 gezeigten Ausführungsform ist der Wärmeübertrager 1 bzw. der Ladeluftkühler 16 zweckmäßig in die Motorhaube 20 integriert. Die Motorhaube 20 dient in bekannter Weise zur Abdeckung bzw. zum Verschließen des Motorraums 8. Die Motorhaube 20 kann insbesondere zweischalig ausgebildet sein, was die Integration des Wärmeübertragers 1 erleichtert. Dabei können eine Oberschale 22 und eine Unterschale 23 der Motorhaube 20 grundsätzlich einen Aufnahmeraum zur Unterbringung des Wärmeübertragers 1 ausbilden. Bei dieser Bauform ist der Wärmeübertrager 1 dadurch in die Motorhaube 20 integriert, dass er zwischen deren Schalen 22, 23 in die Motorhaube 20 eingebaut ist. Die Schalen 22, 23 können dabei insbesondere auch aus einem Metall hergestellt sein. Alternativ ist auch eine Ausführung der Motorhaube 20 zumindest teilweise aus Kunststoff denkbar. Dann bietet sich ein weitaus höherer Integrationsgrad für den Wärmeübertrager 1 an. Insbesondere können einzelne fluidführende Komponenten des Wärmeübertragers 1 unmittelbar an der Motorhaube 20, insbesondere an einem der Schalenkörper 22, 23 ausgebildet sein.

Im Beispiel ist die Motorhaube 20 auf der Seite des Motorraums 8 dem Umgebungsluftstrom 21 ausgesetzt, wodurch die Umgebungsluft wieder das zweite Fluid 3 des Wärmeübertragers 1 bildet. Zur Führung des Umgebungsluftstroms 21 kann wieder eine Motorabdeckung 19 vorgesehen sein, die in Fig. 4 mit unterbrochener Linie dargestellt ist. Ebenso ist es grundsätzlich möglich, die Motorhaube 20 von außen mit Umgebungsluft zu beaufschlagen. Dabei kann die Motorhaube 20 eine geschlossene Außenhaut aufweisen. Ebenso ist es möglich, zumindest eine Kühlluftöffnung in der Motorhaube 20 auszubilden, wodurch die Motorhaube 20 mit Umgebungsluft durchströmbar ist. Sofern eine derartige Durchströmung der Motorhaube 20 mit Umgebungsluft vorgesehen ist, ist der Wärmeübertrager 1 zweckmäßig in dem dann ausgebildeten Umgebungsluftpfad angeordnet, um einen intensiven Wärmeübergang zwischen den beiden Fluiden 2, 3 des Wärmeübertragers 1 zu ermöglichen. Auch hier kann der Umgebungsluftstrom 21 zweckmäßig mit Hilfe des Fahrtwinds generiert werden bzw. durch diesen gebildet sein.

Obwohl die hier vorgestellten Einbauvarianten bzw. Integrationsvarianten alternativ vorgestellt worden sind, ist klar, dass grundsätzlich auch eine kumulative Realisierung möglich ist. Beispielsweise können im Motorraum 8 mehrere derartige Wärmeübertrager 1 angeordnet sein, bspw. in der Zylinderkopfhaube 17, in der Motorabdeckung 19 und in der Motorhaube 20. Ferner ist klar, dass der Wärmeübertrager 1 grundsätzlich auch in ein anderes, bevorzugt aus Kunststoff hergestelltes Fahrzeugbauteil integriert sein kann, das sich am bzw. im Motorraum 8 befindet. Beispielsweise kann eine den Motorraum 8 von einem Fahrzeuginnenraum abgrenzende Spritzwand oder Stirnwand zur Integration des Wärmeübertragers 1 vorgesehen sein. Desweiteren ist klar, dass der hier vorgestellte Wärmeübertrager 1 nicht zwingend als Ladeluftkühler 16 ausgestaltet sein muss, vielmehr sind auch andere Einsatzzwecke für den Wärmeübertrager 1 denkbar. Beispielsweise kann er zur Aufheizung bzw. zur Kühlung von Innenraumluft genutzt werden.

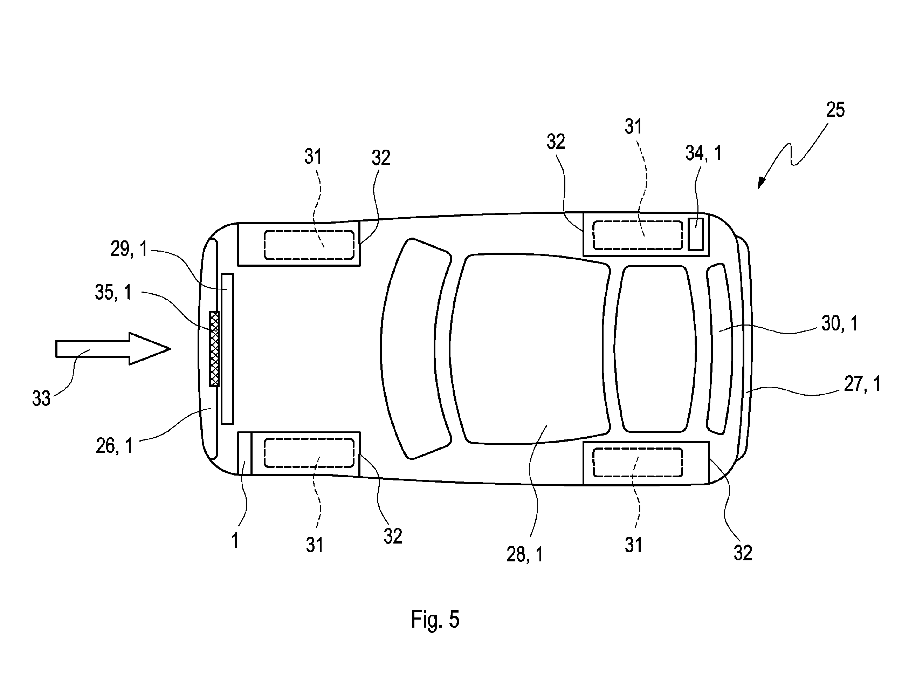

Entsprechend Fig. 5 kann ein vereinfacht dargestelltes Kraftfahrzeug 25 einen frontseitigen oder bugseitigen Stoßfänger 26, einen heckseitigen Stoßfänger 27 und ein Dach 28 aufweisen. Zusätzlich kann ein Frontspoiler oder bugseitiger Spoiler 29 vorgesehen sein. Zusätzlich oder alternativ kann auch ein Heckspoiler 30 vorgesehen sein. Das Fahrzeug 25 weist mehrere Räder 31 auf, die jeweils in einem Radkasten 32 untergebracht sind. Es ist klar, dass das Fahrzeug 25 grundsätzlich noch weitere Bauteile aufweisen kann. Von Interesse sind im vorliegenden Zusammenhang Bauteile, die während einem Fahrbetrieb des Fahrzeugs 25 einer Luftströmung 33 ausgesetzt sind. Diese Luftströmung 33 wird im allgemeinen auch als Fahrtwind bezeichnet. Entsprechend einer vorteilhaften Ausführungsform kann der Frontstoßfänger 26 als Wärmeübertrager 1 ausgestaltet sein. Mit anderen Worten, der Wärmeübertrager 1 ist in den frontseitigen Stoßfänger 26 integriert. Zusätzlich oder alternativ kann der Wärmeübertrager 1 in den heckseitigen Stoßfänger 27 integriert sein. Zusätzlich oder alternativ kann der Wärmeübertrager 1 in den Frontspoiler 29 integriert sein. Zusätzlich oder alternativ kann der Wärmeübertrager 1 in den Heckspoiler 30 baulich integriert sein. Ferner kann der Wärmeübertrager 1 in einen Abschnitt eines der Radkästen 32 integriert sein. Ferner kann er in eine Radkastenverkleidung 34 eines der Radkästen 32 integriert sein. Besonders vorteilhaft ist eine Ausführungsform, bei welcher der Wärmeübertrager 1 in das Dach 28 integriert ist. Außerdem kann der Wärmeübertrager 1 in einen Kühlergrill 35 integriert sein, durch den der Fahrtwind 33 hindurchströmt, um zu einem konventionellen Hauptkühler des Motorkühlkreises zu gelangen. Ebenso ist es denkbar, den Wärmeübertrager 1 beispielsweise in frontseitige Kotflügel zu integrieren, da diese im Fahrbetrieb ebenfalls dem Fahrtwind 33 stark ausgesetzt sind. Die genannten Beispiele können alternativ verwirklicht werden. Ebenso ist es möglich, die Beispiele kumulativ zu verwirklichen, wobei insbesondere auch beliebige Kombinationen denkbar sind.

Die Verwendung derartiger Kunststoff-Wärmeübertrager 1 durch Integration in ohnehin am Fahrzeug 25 vorhandene Bauteile nutzt unter anderem die komplexe Formbarkeit von Kunststoffbauteilen, so dass es relativ einfach möglich ist, einen effektiven Wärmeübertrager 1 auch bei komplex geformten Bauteilen vorzusehen. Des Weiteren zeichnen sich Kunststoffteile häufig durch eine große Toleranz gegenüber Deformationen aus. Beispielsweise können Kunststoffbauteile häufig in einem großen Verformungsbereich elastisch verformt werden. Insbesondere im Crashfall können die Kunststoff-Wärmeübertrager 1 leichtere Kollisionen somit ohne bleibende Beschädigung überstehen. Dies kann im Hinblick auf die Einstufung des Fahrzeugs 25 bei einer Fahrzeugversicherung vorteilhaft sein, wenn im Crashfall geringerer Schäden zu erwarten sind.

## Patentansprüche

1. Wärmeübertrager zum Übertragen von Wärme zwischen einem ersten Fluid (2) und einem zweiten Fluid (3) in einem Kraftfahrzeug (25),
wobei alle fluidführenden Komponenten (4, 5, 6, 7) des Wärmeübertragers (1) aus Kunststoff hergestellt sind,
wobei der Wärmeübertrager (1) in ein Fahrzeugbauteil (17, 19, 20, 26, 27, 28, 29, 30, 32, 34, 35) integriert ist, das im Fahrbetrieb des Fahrzeugs (25) von einer Luftströmung (33) angeströmt oder umströmt ist.

2. Wärmeübertrager nach Anspruch 1,
**dadurch gekennzeichnet,**
**dass** das Fahrzeugbauteil (17, 19, 20, 26, 27, 28, 29, 30, 32, 34, 35) an oder in einem Motorraum (8) des Fahrzeugs (25) angeordnet ist.

3. Wärmeübertrager nach Anspruch 2,
**dadurch gekennzeichnet,**
**dass** der Wärmeübertrager (1) als Ladeluftkühler (16) ausgestaltet ist und im Motorraum (8) im Frischluftpfad (11) stromab einer Ladeeinrichtung (10), insbesondere eines Abgasturboladers, angeordnet ist.

4. Wärmeübertrager nach einem der Ansprüche 1 bis 3,
**dadurch gekennzeichnet,**
**dass** der Wärmeübertrager (1) zur Wärmeübertragung zwischen einem gasförmigen ersten Fluid (2) und einem gasförmigen zweiten Fluid (3) oder zwischen einem gasförmigen ersten Fluid (2) und einem flüssigen zweiten Fluid (3) ausgestaltet ist.

5. Wärmeübertrager nach einem der Ansprüche 1 bis 4,
**dadurch gekennzeichnet,**
**dass** das erste Fluid (2) Ladeluft einer Ladeeinrichtung (10), insbesondere eines Abgasturboladers, ist, während das zweite Fluid (3) ein Kühlmittel eines Kühlkreises (24) einer Brennkraftmaschine (9) des Fahrzeugs (25) oder Umgebungsluft (21) ist.

6. Wärmeübertrager nach Anspruch 4 oder 5,
**dadurch gekennzeichnet,**
**dass** der Wärmeübertrager (1) im Einbauzustand einerseits in einen Frischluftpfad (11) zwischen einer Ladeeinrichtung (10), insbesondere eines Abgasturboladers, und einer Brennkraftmaschine (9) des Fahrzeugs (25) fluidisch eingebunden ist und andererseits in einen Kühlkreis (24) der Brennkraftmaschine (9) oder in einen Umgebungsluft durch den Motorraum (8) führenden Umgebungsluftpfad (21) fluidisch eingebunden ist.

7. Wärmeübertrager nach einem der Ansprüche 1 bis 6,
**dadurch gekennzeichnet,**
**dass** der Wärmeübertrager (1) in eine Zylinderkopfhaube (17) einer Brennkraftmaschine (9) des Fahrzeugs (25) integriert ist.

8. Wärmeübertrager nach einem der Ansprüche 1 bis 6,
**dadurch gekennzeichnet,**
**dass** der Wärmeübertrager (1) in eine Motorhaube (20) des Fahrzeugs integriert ist.

9. Wärmeübertrager nach einem der Ansprüche 1 bis 6,
**dadurch gekennzeichnet,**
**dass** der Wärmeübertrager (1) in eine Motorabdeckung (19) integriert ist, die im Motorraum (8) als Sichtschutz für eine Brennkraftmaschine (9) und/oder als Schallabschirmung einer Brennkraftmaschine (9) und/oder als Luftführungselement zum Durchströmen des Motorraums (8) mit Umgebungsluft und/oder zum Anströmen und/oder Umströmen einer Brennkraftmaschine (9) mit Umgebungsluft ausgestaltet und angeordnet ist.

10. Wärmeübertrager nach einem der Ansprüche 1 bis 5,
**dadurch gekennzeichnet,**
**dass** der Wärmeübertrager (1) in einen Stoßfänger (26, 27) am Bug oder am Heck des Fahrzeugs (25) integriert ist.

11. Wärmeübertrager nach einem der Ansprüche 1 bis 5,
**dadurch gekennzeichnet,**
**dass** der Wärmeübertrager (1) in einen Spoiler (29, 30) am Bug oder am Heck des Fahrzeugs (25) integriert ist.

12. Wärmeübertrager nach einem der Ansprüche 1 bis 5,
**dadurch gekennzeichnet,**
**dass** der Wärmeübertrager (1) in einen Radkasten (32) oder in eine Radkastenverkleidung (34) am Bug oder am Heck des Fahrzeugs (25) integriert ist.

13. Wärmeübertrager nach einem der Ansprüche 1 bis 5,
**dadurch gekennzeichnet,**
**dass** der Wärmeübertrager (1) in einen Kühlergrill (35) des Fahrzeugs (25) integriert ist.

14. Wärmeübertrager nach einem der Ansprüche 1 bis 5,
**dadurch gekennzeichnet,**
**dass** der Wärmeübertrager (1) in ein Dach (28) des Fahrzeugs (25) integriert ist.

15. Fahrzeugbauteil mit darin integriertem Wärmeübertrager (1) nach einem der Ansprüche 1 bis 14.
